# EUROPÄISCHE PATENTSCHRIFT

(11) **EP 0 849 478 B1**
(45) Veröffentlichungstag und Bekanntmachung des Hinweises auf die Patenterteilung: **25.02.2004**
(21) Anmeldenummer: 97118503.8
(22) Anmeldetag: 24.10.1997
(51) Int. Cl.: F16B 27/00

(54) **Magazinband für Befestigungselemente**
Fixing elements magazine belt
Bande d'emballage pour éléments de fixation

(30) Priorität: 19.11.1996 DE 29620053 U
(43) Veröffentlichungstag der Anmeldung: 24.06.1998
(73) Patentinhaber: Adolf Würth GmbH & Co. KG, 74653 Künzelsau (DE)
(72) Erfinder: Wieland, Achim, 74226 Nordheim (DE)
(74) Vertreter: Patentanwälte Ruff, Wilhelm, Beier, Dauster & Partner

(56) Entgegenhaltungen:
- EP-A- 0 648 579
- DE-U- 9 305 336
- DE-U- 29 500 047
- DE-U- 29 621 830

## Beschreibung

Die Erfindung geht aus von einem Magazinband für Befestigungselemente.

Es ist bekannt, in automatischen Schraubern die Befestigungselemente mit Hilfe von Magazinbändern zuzuführen. Diese sorgen für den korrekten Transport der Befestigungselemente zu der Stelle, an der sie von dem automatischen Schrauber verschraubt werden können. Die Bänder selbst sollen einfach aufgebaut sein, da es sich um Wegwerfartikel handelt, andererseits aber für eine korrekte Führung und Ausrichtung der Befestigungselemente sorgen. Außerdem sollen sie den Eintreibvorgang, beispielsweise den Einschraubvorgang, des Befestigungselementes nicht stören oder hindern.

Es ist bereits ein Magazinierband dieser Art bekannt (DE 93 05 336 U1), bei dem zur besseren Führung die Öffnungen als Tuben ausgebildet sind, die sich als kurze zylindrische Ansätze auf einer Seite des Bandes erstrecken. Im Band sind Ausstanzungen vorgesehen, die sich über die Wände der Tuben bis fast zu deren Ende erstrecken. Dadurch soll eine Schwächung der Wände der etwa zylindrischen Tuben bewirkt werden, damit das Band nach Befestigen des Befestigungselementes leichter ausreißt.

Ebenfalls bekannt ist ein Schraubenband (DE 295 00 047 U1), bei dem hülsenartige Ansätze vorhanden sind, deren Innenseite kegelförmig ausgebildet ist. Damit soll der gesamte Kopf des Befestigungselementes, üblicherweise der Kopf einer Senkschraube, unter großflächiger Anlage der Unterseite des Schraubenkopfes gehaltert werden.

Weiterhin ist ein Magazinband nach dem ersten Teil des Anspruchs 1 bekannt. Bei diesem Magazinband sind die Kerben als Schlitze oder Schnitte ausgebildet und gehen durch das Band von dessen Oberseite zu dessen Unterseite durch (EP-A-648 579).

Der Erfindung liegt die Aufgabe zugrunde, ein Magazinband zu schaffen, das bei einfachem Aufbau und kostengünstiger Herstellung sowohl eine Halterung der Befestigungselemente beim Zuführen als auch ein leichtes Entfernen der Befestigungselemente aus dem Band ermöglicht.

Zur Lösung dieser Aufgabe schlägt die Erfindung ein Magazinband mit den im Anspruch 1 genannten Merkmalen vor. Weiterbildungen der Erfindung sind Gegenstand von Unteransprüchen.

Das Anbringen der Kerben von der Oberseite des Bandes her ist deutlich einfacher durchzuführen als die Maßnahme nach dem Stand der Technik. Unter Oberseite ist die den hülsenförmigen Ansätzen gegenüberliegende Seite zu verstehen. Die Befestigungselemente werden so in das Band eingesetzt, dass ihr Kopf auf der Oberseite angeordnet ist, während ihr Schaft durch die Öffnungen hindurch und durch die Ansätze auf der Unterseite mehr oder weniger weit herausragt.

Dadurch, dass die Ausstanzungen nicht bis in die Öffnungen selbst reichen, vergrößert sich die Stabilität. Dennoch ist das Band soweit geschwächt, dass es keine Probleme bei dem Weitertransport des Bandes gibt, wenn das jeweils letzte Befestigungselement eingeschraubt wurde.

Gemäß der Erfindung ist vorgesehen, dass die Tiefe der Kerben kleiner ist als die Dicke des Kunststoffbandes, insbesondere etwa halb so tief wie das Band dick ist. Es hat sich herausgestellt, dass eine solche Einkerbung für den hier beabsichtigten Zweck vollständig ausreicht.

Aufgrund der Maßnahmen der Erfindung wird es möglich, die Wand der hülsenartigen Ansätze geschlossen auszubilden. In Weiterbildung der Erfindung kann vorgesehen sein, dass die hülsenartigen Ansätze im Bereich ihres dem Band abgewandten Endes innen verengt ausgebildet sind. Diese innere Verengung entspricht etwa dem Außendurchmesser des Schaftes des Befestigungsbolzens. Dieser kann auf diese Weise nicht nur sicher gehalten, sondern auch ausreichend ausgerichtet werden.

Erfindungsgemäß kann in Weiterbildung vorgesehen sein, dass die Breite der Ausstanzungen mit zunehmendem Abstand von der Öffnung, der sie zugeordnet sind, zunimmt.

Die Ausstanzungen können insbesondere etwa Tropfenform aufweisen.

Insbesondere kann vorgesehen sein, dass die Seitenkanten der Ausstanzungen geradlinig und etwa radial gegenüber der Öffnung verlaufen, der sie zugeordnet sind.

Insbesondere kann die Außenkante der Ausstanzungen kreisbogenförmig verlaufen, während die Innenkante der Ausstanzungen etwa konzentrisch zu der Öffnung verlaufend ausgebildet sein können, der die Ausstanzung zugeordnet ist.

Die Erfindung schlägt in Weiterbildung vor, dass für jede Öffnung vier Ausstanzungen vorgesehen sein können, die insbesondere gleichmäßig über den Umfang verteilt ausgebildet sind.

Dabei kann in Weiterbildung der Erfindung vorgesehen sein, dass die Verbindungslinien zwischen zwei einander gegenüberliegenden Ausstanzungen unter einem Winkel von etwa 45° gegenüber der Längsrichtung des Bandes verlaufen.

Weitere Merkmale, Einzelheiten und Vorzüge ergeben sich aus den Schutzansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine Teilaufsicht auf einen Ausschnitt eines von der Erfindung vorgeschlagenen Magazinbandes;
- Fig. 2: einen Schnitt durch das Magazinband der Fig. 1.

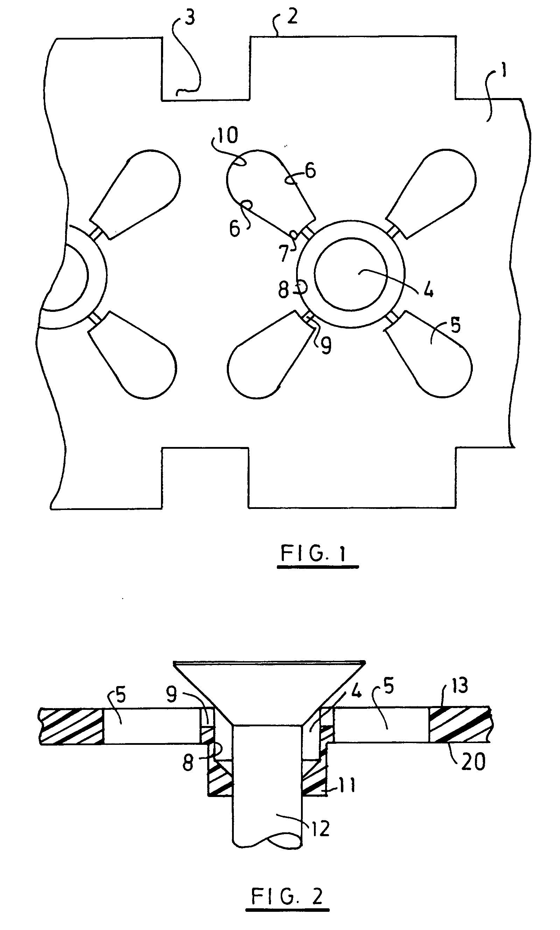

Fig. 1 zeigt eine Aufsicht auf ein Magazinband 1, das als schmales langgestrecktes Band mit zwei parallelen Außenkanten 2 ausgebildet ist. Längs der Außenkanten 2 sind in regelmäßigem Abstand Einkerbungen 3 vorgesehen, die zum Transport des Bandes in einem automatischen Schrauber dienen. Der gegenseitige Abstand zweier Einkerbungen 3 ist dabei auf die Schraubervorrichtung abgestimmt.

In Längsrichtung des Bandes 1 hintereinander ist eine Vielzahl von im dargestellten Beispiel kreisrunden Öffnungen 4 angeordnet. Die Öffnungen 4 sind im dargestellten Beispiel sowohl mittig zwischen den beiden Seitenkanten 2 des Bandes 1 als auch in Längsrichtung mittig zwischen zwei Einkerbungen 3 angeordnet. Jede Öffnung 4 ist von insgesamt vier Ausstanzungen 5 umgeben, die etwa Tropfenform aufweisen. Die Längsachse oder auch Symmetrieachse jeder Ausstanzung 5 verläuft unter einem Winkel von 45° gegenüber der Längsrichtung des Bandes 1.

Die Ausstanzungen 5 weisen je zwei geradlinige Seitenkanten 6 auf, die etwa radial gegenüber der Öffnung 4 verlaufen. Die innere Seitenkante 7, d.h. die der Öffnung 4 am nächsten kommende Seitenkante der Ausstanzung 5, verläuft koaxial zum Rand 8 der Öffnung 4. Die Ausstanzungen 5 weisen also vom Rand 8 der Öffnung 4 einen Abstand auf.

Zwischen dem Rand 8 der Öffnung 4 und jeder zugeordneten Ausstanzung 5 ist eine etwa radial verlaufende Kerbe 9 eingeformt, die etwa radial bzgl. der Öffnung 4 verläuft und die innere Seitenkante 8 der Ausstanzung etwa in der Mitte trifft. Die Kerben 9 reichen nicht bis zu der der in Fig. 1 sichtbaren Oberseite gegenüberliegenden Unterseite des Bandes 1.

Die äußere Seitenkante 10 der Ausstanzungen 5 wird durch einen kreisförmigen Bogen gebildet, der tangential in die Seitenkanten 6 übergeht.

Fig. 2 zeigt einen Schnitt durch das Band der Fig. 1, wobei die Schnittebene durch den Mittelpunkt einer Öffnung 4 und die Symmetrieebene zweier einander gegenüberliegender Ausstanzungen 5 hindurchgelegt ist.

Auf der Unterseite 20 des Bandes 1 setzen sich die Öffnungen 4 in kurze zylindrische hülsenartige Ansätze 11 fort. Diese weisen eine axiale Erstreckung auf, die etwas größer ist als die Dicke des Bandes. In ihrem äußeren Endbereich weisen die Ansätze 11 an ihrer Innenseite eine Verengung auf, die dadurch einen Rand bilden, der an dem Schaft 12 eines in eine Öffnung 4 eingesetzten Befestigungselementes angreift.

Aus Fig. 2 ist zu sehen, daß die Kerben 9, die die Öffnungen 4 mit den Ausstanzungen 5 verbinden, eine von der Oberseite 13 des Bandes aus gerechnete Tiefe aufweisen, die etwa der halben Dicke des Bandes entspricht.

Die hülsenartigen Ansätze 11 weisen über ihren gesamten Umfang eine geschlossene Außenwand auf.

In der Darstellung der Fig. 2 ist eine als Beispiel für ein Befestigungselement dienende Senkkopfschraube in eine Öffnung 4 des Bandes eingesetzt. Sie weist die bei der Benutzung des Magazinbandes korrekte Positionierung auf. Die Ausrichtung des Befestigungselementes geschieht dadurch, dass dieses mit der Unterseite seines Kopfes an der oberen Randkante der Öffnung 4 anliegt, während die Verengung des hülsenartigen Ansatzes 11 mit einem gewissen Abstand von dem Schraubenkopf an dem Schaft 12 der Schraube angreift.

Der Abstand der Außenkanten 10 zweier einander gegenüberliegender Ausstanzungen 5 ist deutlich größer als der Außendurchmesser des Schraubenkopfes. Beim Eindrehen der Schraube mit Hilfe eines Schraubers wird das Band im Bereich um den Schraubenkopf aufgerissen. Das Band behindert das Einschrauben des Befestigungselementes nicht.

## Patentansprüche

1. Magazinband für Befestigungselemente wie Schrauben, Bolzen oder dergleichen, enthaltend:
1.1 ein flaches schmales Kunststoffband (1),
1.2 eine Vielzahl von in Längsrichtung des Bandes (1) hintereinander angeordneten Öffnungen (4) im Band (1), zur Aufnahme und Halterung der Befestigungselemente,
1.3 auf der Unterseite (20) des Bandes (1) angeordnete, die Öffnungen (4) des Bandes fortsetzende hülsenartige Ansätze (11), sowie
1.4 die Öffnungen (4) umgebende Ausstanzungen (5), die
1.4.1 von der ihnen zugeordneten Öffnung (4) einen Abstand aufweisen, wobei
1.5 das Band (1) auf seiner Oberseite (13) Kerben (9) aufweist, die
1.5.1 von den Öffnungen (4) etwa radial zu den Ausstanzungen (5) verlaufen, **dadurch gekennzeichnet, dass**
1.6 die Tiefe der Kerben (9) kleiner als die Dicke des Bandes (1) ist.

2. Magazinband nach Anspruch 1, bei dem die Tiefe der Kerben (9) etwa der Hälfte der Dicke des Bandes (1) entspricht.

3. Magazinband nach Anspruch 1 oder 2, bei dem die Wand der hülsenartigen Ansätze (11) geschlossen ist.

4. Magazinband nach einem der vorhergehenden Ansprüche, bei dem die hülsenartigen Ansätze (11) im Bereich ihres dem Band (1) abgewandten Endes innen verengt sind.

5. Magazinband nach einem der vorhergehenden Ansprüche, bei dem die Ausstanzungen (5) eine mit dem Abstand von der zugeordneten Öffnung (4) zunehmende Breite aufweisen.

6. Magazinband nach einem der vorhergehenden Ansprüche, bei dem die Seitenkanten (6) der Ausstanzungen (5) etwa radial und/oder geradlinig verlaufen.

7. Magazinband nach einem der vorhergehenden Ansprüche, bei dem die Außenkante (10) der Ausstanzungen (5) kreisbogenförmig ausgebildet ist.

8. Magazinband nach einem der vorhergehenden Ansprüche, bei dem die inneren Seitenkanten (7) der Ausstanzungen (5) konzentrisch zu der zugeordneten Öffnung (4) verlaufen.

9. Magazinband nach einem der vorhergehenden Ansprüche, mit vier gleichmäßig verteilten Ausstanzungen (5) für jede Öffnung (4).

10. Magazinband nach Anspruch 9, bei dem eine zwei gegenüberliegende Ausstanzungen (5) verbindende Linie unter einem Winkel von etwa 45° gegenüber der Längsrichtung des Bandes (1) verläuft.

## Claims

1. Magazine band for mounting elements such as screws, bolts or similar, containing:
1.1 a flat, narrow plastic band (1),
1.2 a multitude of openings (4) positioned one behind the other in the longitudinal direction of the band (1) to accommodate and retain the mounting elements,
1.3 sleeve-type appendages (11) positioned on the bottom (20) of the band (1), which extend the openings (4) of the band, as well as
1.4 cuttings (5) surrounding the openings (4), which
1.4.1 are set at an interval from their assigned opening (4), wherein
1.5 the band (1) has notches (9) on the top (13), which
1.5.1 run from the openings (4) in a somewhat radial direction to the cuttings (5), **characterised in that** the
1.6 the depth of the notches (9) is less than the thickness of the band (1).

2. Magazine band according to claim 1, whereby the depth of the notches (9) corresponds to approximately half of the thickness of the band (1).

3. Magazine band according to claim 1 or 2, whereby the wall of the sleeve-like appendages (11) is closed.

4. Magazine band according to one of the preceding claims, whereby the sleeve-like appendages (11) are tapered on the interior of the end turned away from the band (1).

5. Magazine band according to one of the preceding claims, whereby the cuttings (5) increase in width as the distance from the assigned opening (4) increases.

6. Magazine band according to one of the preceding claims, whereby the side edges (6) of the cuttings (5) run in a somewhat radial and/or linear direction.

7. Magazine band according to one of the preceding claims, whereby the outer edge (10) of the cuttings (5) is designed in the form of a circular arc.

8. Magazine band according to one of the preceding claims, whereby the inner side edges (7) of the cuttings (5) run concentrically to the assigned opening (4).

9. Magazine band according to one of the preceding claims with four equally distributed cuttings (5) for each opening (4).

10. Magazine band according to claim 9, whereby a line connecting two opposing cuttings (5) runs at an angle of approx 45° vis à vis the longitudinal direction of the band (1).

## Revendications

1. Ruban magasin pour des éléments de fixation tels que des vis, des boulons ou des éléments semblables, comprenant :
1.1 un ruban plastique (1) plat et fin,
1.2 une série d'ouvertures (4) dans le ruban (1) disposées les unes derrière les autres dans le sens de la longueur du ruban (1) pour loger et maintenir les éléments de fixation,
1.3 des excroissances tubulaires (11) prolongeant les ouvertures (4) du ruban disposées sur la face inférieure (20) du ruban (1) ainsi que
1.4 des poinçonnages (5) entourant les ouvertures (4)
1.4.1 présentant une distance par rapport à l'ouverture qui leur a été attribuée,
1.5 la partie supérieure (13) du ruban (1) présentant des encoches (9)
1.5.1 étant orientées plus ou moins radialement en direction des poinçonnages (5) en partant des ouvertures (4), **caractérisé par le fait que**
1.6 la profondeur des encoches (9) est inférieure à l'épaisseur du ruban (1).

2. Ruban magasin selon la revendication 1 sur lequel la profondeur des encoches (9) correspond environ à la moitié de l'épaisseur du ruban (1).

3. Ruban magasin selon la revendication 1 ou 2, sur laquelle la paroi des excroissances tubulaires (11) est fermée.

4. Ruban magasin selon l'une des revendications précédentes sur lequel les excroissances tubulaires (11) sont rétrécies à l'intérieur dans la zone opposée au ruban.

5. Ruban magasin selon l'une des revendications précédentes sur lequel les poinçonnages (5) présentent une largeur croissante par rapport à la distance de l'ouverture correspondante (4).

6. Ruban magasin selon l'une des revendications précédentes sur lequel les arêtes latérales (6) des poinçonnages (5) sont plus ou moins orientées radialement et/ou en ligne droite.

7. Ruban magasin selon l'une des revendications précédentes sur lequel l'arête externe (10) des poinçonnages (5) est en forme d'arc de cercle.

8. Ruban magasin selon l'une des revendications précédentes sur lequel les arêtes latérales (7) intérieures des poinçonnages (5) sont orientées concentriquement autour de l'ouverture (4) qui leur a été affectée.

9. Ruban magasin selon l'une des revendications précédentes avec quatre poinçonnages (5) répartis uniformément autour de chaque ouverture (4).

10. Ruban magasin selon la revendication 9 sur lequel une ligne reliant deux poinçonnages (5) opposés est orientée sous un angle d'environ 45 ° par rapport au sens de la longueur du ruban (1).
